# EUROPÄISCHE PATENTSCHRIFT

(11) **EP 2 718 640 B1**
(45) Veröffentlichungstag und Bekanntmachung des Hinweises auf die Patenterteilung: **31.08.2016**
(21) Anmeldenummer: 12780075.3
(22) Anmeldetag: 08.06.2012
(51) Int. Cl.: F24J 2/52

(54) **ANORDNUNG EINES GERAHMTEN PHOTOVOLTAIK-MODULS AN EINEM TRÄGER**
ARRANGEMENT OF A FRAMED PHOTOVOLTAIC MODULE ON A CARRIER
AGENCEMENT D'UN MODULE PHOTOVOLTAÏQUE ENCADRÉ SUR UN SUPPORT

(30) Priorität: 08.06.2011 DE 102011104461; 01.09.2011 DE 202011105218 U
(43) Veröffentlichungstag der Anmeldung: 16.04.2014
(73) Patentinhaber: Schletter GmbH, 83527 Kirchdorf (DE)
(72) Erfinder: SCHMID, Bernhard, 83562 Rechtmehring (DE); FLUHRER, Dieter, 84437 Reichertsheim (DE); URBAN, Hans, 83527 Haag (DE)
(74) Vertreter: Thum, Bernhard
(86) Internationale Anmeldenummer: PCT/DE2012/000603
(87) Internationale Veröffentlichungsnummer: WO 2012/167773

(56) Entgegenhaltungen:
- WO-A2-2010/054496
- DE-U1-202010 001 518
- JP-A- 10 231 600

## Beschreibung

Die Erfindung betrifft eine Anordnung eines gerahmten Photovoltaik-Moduls (PV-Moduls) an einem Träger.

Gerahmte PV-Module werden für gewöhnlich mittels Modulklemmen an Trägern angeordnet.

Aus DE 296 16 947 U1 ist ein Befestigungssystem für gerahmte PV-Module bekannt. Die PV-Module liegen mit ihren Rahmen auf Tragprofilen auf. Das Befestigungssystem enthält Modulklemmen, die aus starren Haltekörpern und Schrauben bestehen. Die starren Haltekörper fassen den Rahmen und sind über die- Schrauben mit den Tragprofilen verbunden. Mit Anziehen der Schrauben werden die starren Haltekörper und damit der Rahmen gegen die Tragprofile gespannt.

Aus WO 2010/054496 A2 ist ein Dachaufbau mit einer Anordnung von Solarpaneelen bekannt. Die Anordnung enthält ein Solarpanel, das auf einem Auflagerstück aufliegt, und eine U-förmige Klammer. Die Klammer besteht aus einem Aluminiumprofil und sichert das Solarpanel gegen Abheben.

Eine Aufgabe der Erfindung ist es, eine Anordnung eines gerahmten PV-Moduls an einem Träger zu entwickeln, die weniger und materialeffizientere Bauteile umfasst und schraubenfrei sowie schnell und einfach zu montieren ist. Außerdem sollen die Belastbarkeit, die Stabilität und die Zuverlässigkeit der Verbindung zwischen dem PV-Modul und dem Träger verbessert werden.

Diese Aufgabe wird mit den Merkmalen des Anspruchs 1 gelöst.

Gemäß Anspruch 1 weist eine Anordnung eines gerahmten PV-Moduls an einem Träger ein Rahmensegment auf, das ein PV-Modul einfasst und das eine obere, eine untere und seitliche Außenwand aufweist, wobei die obere und die untere Außenwand einander gegenüber liegen und mittels der seitlichen Außenwand miteinander, vorzugsweise rechtwinklig zu einem U verbunden sind. Weiter weist die Anordnung eine Trägerwand eines Modulträgers auf, wobei sich das Rahmensegment mittels seiner unteren Außenwand auf einer Oberseite der Trägerwand abstützt. Ein Haltekörper ist integral geformt und weist ein erstes Angriffsende und ein zweites Angriffsende auf, wobei der Haltekörper mittels seines ersten Angriffsendes an einer oberen Kontaktstelle an der oberen Außenwand angreift und das Rahmensegment gegen die Trägerwand hält. Die obere Kontaktstelle ist vorzugsweise direkt auf der oberen Außenwand angeordnet, das heißt an einer von der unteren Außenwand abgewandten Oberseite der oberen Außenwand.

Erfindungsgemäß ist der Haltekörper biegeelastisch ausgebildet und greift an einer unteren Kontaktstelle an einer Unterseite der Trägerwand an, wobei die Unterseite der Trägerwand von der Oberseite der Trägerwand abgewandt ist. Ein Abstand zwischen dem ersten Angriffsende und dem zweiten Angriffsende ist in einem ungespannten Zustand des Haltekörpers kürzer als der Abstand zwischen der oberen Kontaktstelle und der unteren Kontaktstelle. Zudem ist eine gedachte gerade Verbindung zwischen der ersten Kontaktstelle und der zweiten Kontaktstelle frei von einer Verschneidung mit der dem PV-Modul abgewandten Außenseite der seitlichen Außenwand.

Die gedachte gerade Verbindung kann mittels einer einfachen geometrischen Geraden gebildet sein, die durch die erste und die zweite Kontaktstelle verläuft oder dort endet bzw. zwischen diesen verläuft. Sind die Kontaktstellen wie bevorzugt linear und zueinander parallel ausgebildet, so kann die gedachte gerade Verbindung auch mittels einer einfachen geometrischen Ebene gebildet werden, die parallel durch die erste und die zweite Kontaktstelle verläuft oder dort endet bzw. zwischen diesen verläuft. Wesentlich ist, dass die gedachte gerade Verbindung keinen Schnittpunkt mit der dem PV-Modul abgewandten Außenseite der seitlichen Außenwand hat. Ob die gedachte gerade Verbindung frei von einer Verschneidung mit der abgewandten Außenseite ist, kann anhand eines Querschnitts durch die Anordnung einfach ermittelt werden. Der Querschnitt ist dabei senkrecht durch die obere, die untere und die seitliche Außenwand orientiert.

Eine solche Anordnung eines gerahmten PV-Moduls an einem Träger ist mit einfach gestaltbaren und kostengünstigen Haltekörpern, schraubenfrei sowie schnell und einfach montierbar. Die Haltekörper können mit wenig Aufwand in ihre Spannposition gesetzt werden, wobei die Anforderungen hinsichtlich der Belastbarkeit, Stabilität und Zuverlässigkeit der Verbindung erfüllt werden.

Bei einer vorteilhaften Weiterbildung der Anordnung weist die Trägerwand einen Abschnitt auf, an dem die Außenseite der seitlichen Außenwand anlegbar ist und/oder anliegt und der Haltekörper diesen Abschnitt umgreift. Damit ist das Rahmensegment seitlich festlegbar und es kann das PV-Modul insbesondere gegen Hangabtrieb oder windbedingtem Auftrieb lagegesichert sein.

Für eine verbesserte Fixierung des verspannten Haltekörpers in seiner Funktionsstellung und als Abziehsicherung werden folgende Maßnahmen vorgeschlagen, die sowohl einzeln als auch in ihrer Kombination je nach den Gegebenheiten einsetzbar sind:
Die Trägerwand kann eine vorzugsweise durch Blechkantung oder Blechfalzung hergestellte Krümmung oder einen Rand aufweisen, welche das untere Angriffsende hintergreift. Gegebenenfalls kann auch die obere Außenwand eine solche Krümmung oder einen Rand aufweisen, welche das obere Angriffsende hintergreift. Die Trägerwand kann auch eine Vertiefung, vorzugsweise eine rillenförmige Vertiefung oder Verschmälerung aufweisen, in welche das untere Angriffsende eingreift. Ebenso kann alternativ oder zusätzlich auch die obere Außenwand eine solche Vertiefung aufweisen, in welche das obere Angriffsende eingreift. Weiter können das erste Angriffsende und/oder das zweite Angriffsende mehrere zackenförmige Fortsätze aufweisen, welche die Reibung an der jeweiligen Kontaktstelle erhöhen. Die zackenförmigen Fortsätze sind vorzugsweise linear, das heißt in einer geraden Reihe entlang des Angriffsendes angeordnet.

In einer bevorzugten Ausführungsform ist der Haltekörper in einem Querschnitt C-ähnlich geformt mit einem Mittelabschnitt und zwei daran in Gegenüberlage angeordneten Angriffsabschnitten, deren freie Enden die Angriffsenden sind.

In einer weiteren Ausgestaltung sollen dabei die Angriffsabschnitte in Richtung zu ihren Angriffsenden konvergieren, d. h. im Querschnitt spitz aufeinander zulaufen. In einer weiteren Ausgestaltung zur Ausbildung der C-ähnlichen Form sollen die Angriffsabschnitte mittels Zwischenabschnitten mit dem Mittelabschnitt verbunden sein und die Zwischenabschnitte ausgehend vom Mittelabschnitt divergieren bzw. im Querschnitt auseinander laufen. Dabei sollen die Angriffsabschnitte und die Zwischenabschnitte zueinander winkelig ausgerichtet sein, wobei die Winkelscheitel voneinander weggerichtet sind.

Ein Haltekörper kann in einfacher Weise dadurch gesetzt werden, dass er an der gewünschten Position angelegt und mit einem Hammer in seine Klammerstellung aufgeschlagen wird. Für eine solche Montage ist es zweckmäßig, wenn wenigstens an einem Angriffsabschnitt, vorzugsweise am unteren Angriffsabschnitt, ein abgekanteter Aufschiebeabschnitt als Aufschiebeschräge angeformt ist. Damit wird beim Aufschlagen der Haltekörper unter Aufspreizung der Angriffsabschnitte in seine Klammerposition geführt.

Für eine vorteilhafte einfache Lagesicherung des Rahmensegments an der Trägerwand kann als integraler Bestandteil der Trägerwand eine Lasche ausgeklinkt sein und um das innere Ende der Außenwand gebogen werden. Die Lasche kann dabei einfach mit dem Finger durch die von der Lasche frei gegebenen Öffnung in der Trägerwand von hinten her um die Außenwand gebogen werden.

Für eine besonders einfache und schnelle Montage wird ein Montageset aus jeweils einem Haltekörper und einer Montagezange vorgeschlagen. Zur Vorbereitung der Montage ist der Haltekörper in das Zangenmaul einsetzbar und beim Schließen der Montagezange werden die Angriffsabschnitte zur Vergrößerung der Klammerweite aufgespreizt, wobei die Klammerweite dem momentanen Abstand der Angriffsenden entspricht. Damit sind die Angriffsabschnitte mit ihren Angriffsenden auf die obere Außenwand des Rahmensegments und die Unterseite der Trägerwand frei aufsteckbar. Beim Öffnen und nach Abnahme der Montagezange wird die Klammerweite biegeelastisch reduziert, wobei die Angriffsenden an ihren zugeordneten Kontaktstellen mit ihrer Klammerkraft angreifen. In einer konkreten bevorzugten Ausführungsform weist die Montagezwange zwei jeweils an einen Handgriff anschließende Winkelhebel auf, wobei ein erster Winkelhebel an seinem freien Ende mit dem zweiten Winkelhebel an dessen Winkelscheitel über eine Schwenkachse schwenkbar verbunden ist. Am Winkelscheitel des ersten Winkelhebels und am freien Ende des zweiten Winkelhebels sind jeweils Schwenkaufnahmen angeordnet mit der Gestalt der Angriffsabschnitte entsprechenden Aufnahmestrukturen, sowie jeweils einem Eingriffhakenteil zum Eingriff in eine Ausnehmung am jeweiligen Angriffsabschnitt. Damit kann ein Haltekörper zur Vorbereitung der Montage in das Zangenmaul eingesetzt werden ohne daraus wieder abzufallen, was die Montage erheblich vereinfacht. Eine Grundstellung der Schwenkaufnahmen kann mittels Rückstellfedern hergestellt sein. Beim Schließen der Montagezange werden die Schwenkaufnahmen aufgeschwenkt, wodurch der Mittelabschnitt von der Schwenkachse weggewölbt und die Angriffsabschnitte aufgespreizt werden. Der Haltekörper ist dabei so dimensioniert, dass nach Abnahme der Montagezange der Mittelabschnitt im gespannten Zustand zur Außenseite der Außenwand hin noch gewölbt ist. Damit die Montagezange für Haltekörper mit stark unterschiedlicher Klammerweite geeignet ist, kann die Schwenkachse bezüglich einem der Winkelhebel schrittweise verstellbar vorgesehen sein.

Zweckmäßig ist der Haltekörper hinsichtlich der Angriffsabschnitte und ggf. der Zwischenabschnitte symmetrisch aufgebaut. Damit müssen vorteilhaft beim Setzen des Haltekörpers und insbesondere auch beim Einlegen in die Montagezange keine unterschiedlichen Seiten beachtet werden. Ein symmetrischer Aufbau hat zudem statische Vorteile.

Anhand einer Zeichnung wird die Erfindung weiter erläutert.

Es zeigen
- Fig. 1: einen Querschnitt durch einen Teil einer fertig montierten Anordnung eines gerahmten PV-Moduls an einem Träger,
- Fig. 2: eine perspektivische Darstellung der Ansicht nach Fig. 1,
- Fig. 3: eine Ansicht entsprechend Fig. 1 mit einer Blechkantung an einer Trägerwand,
- Fig. 4: eine Ansicht entsprechend Fig. 1 mit einer rillenförmigen Vertiefung an einer Trägerwand,
- Fig. 5: die unverspannte Ausgangslage,
- Fig. 6 bis 8: unterschiedliche Ausführungsformen von Haltekörpern,
- Fig. 9: eine offene Montagezange mit eingesetztem Haltekörper,
- Fig. 10: die geschlossene Montagezange nach Fig. 9 vor dem Aufstecken des Haltekörpers,
- Fig. 11: eine Anordnung entsprechend Fig. 3 mit einer Lagesicherung durch eine Lasche.

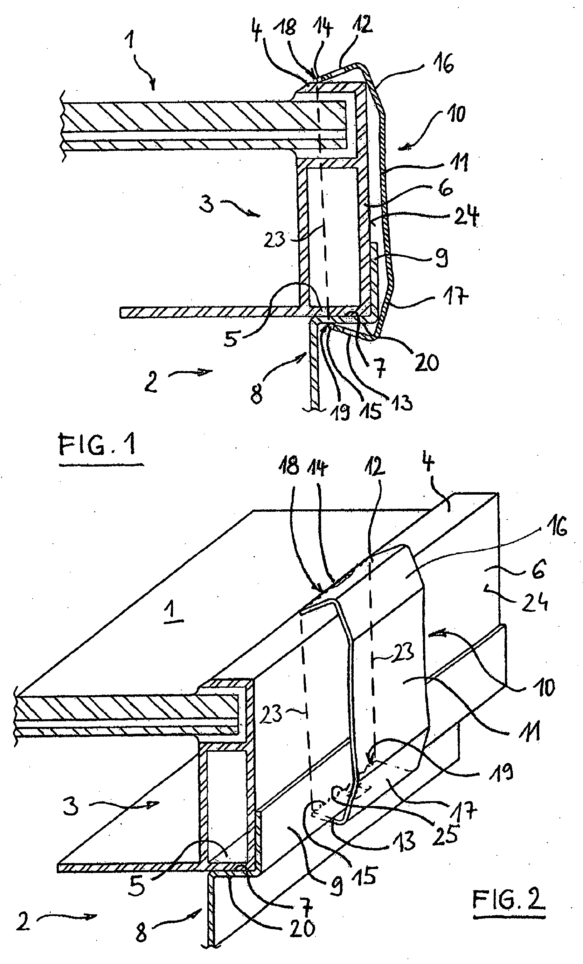

In den Fig. 1 und 2 ist eine Teilansicht einer Anordnung eines gerahmten PV-Moduls 1 an einem Träger 2 gezeigt mit einem Rahmensegment 3, welches das PV-Modul 1 einfasst und das eine obere Außenwand 4, eine untere Außenwand 5 und eine seitliche Außenwand 6 aufweist, wobei die obere Außenwand 4 und die untere Außenwand 5 einander gegenüber liegen und mittels der seitlichen Außenwand 6 rechtwinkelig zu einem U miteinander verbunden sind. Das Rahmensegment 3 ist mittels seiner unteren Außenwand 5 auf einer Oberseite 7 einer Trägerwand 8 des Modulträgers 2 abgestützt. Die Trägerwand 8 weist zudem einen an die Oberseite 7 seitlich außen anschließenden und nach oben abgekanteten Abschnitt 9 auf, an dem die Außenseite der seitlichen Außenwand 6 anliegt und abgestützt ist.

Das Rahmensegment 3 ist mit dem Modulträger 2 mittels eines Haltekörpers 10 zusammengespannt. Der Haltekörper 10 ist biegeelastisch ausgeführt und C-ähnlich geformt mit einem Mittelabschnitt 11 und zwei daran in Gegenüberlage angeordneten Angriffsabschnitten 12, 13, deren freie Enden als Angriffsenden 14, 15 ausgebildet sind. Die Angriffsabschnitte 12, 13 sind mittels Zwischenabschnitten 16, 17 mit dem Mittelabschnitt 11 verbunden. Die Angriffsabschnitte 12, 13 konvergieren in Richtung zu ihren Angriffsenden 14, 15 und die Zwischenabschnitte 16, 17 divergieren ausgehend vom Mittelabschnitt 11.

Der Haltekörper 10 greift mittels seines ersten Angriffsendes 14 an einer oberen Kontaktstelle 18 auf einer Oberseite der oberen Außenwand 4 an. Die Oberseite der oberen Außenwand 14 ist von der unteren Außenwand 5 abgewandt. Mit seinem zweiten Angriffsende 15 greift der Haltekörper 10 an einer unteren Kontaktstelle 19 an der der Oberseite 7 abgewandten Unterseite 20 der Trägerwand 8 an. Eine gedachte gerade Verbindung 23 zwischen den Kontaktstellen 18, 19 ist frei von einer Verschneidung mit der dem PV-Modul 1 abgewandten Außenseite 24 der seitlichen Außenwand 6. Die gedachte gerade Verbindung 23 ist im Querschnitt gemäß Fig. 1 durch eine einfache geometrische Gerade gebildet, die durch beide Kontaktstellen 18 und 19 verläuft oder wie hier dargestellt an diesen endet. Da die Angriffsenden 14 und 15 im Wesentlichen linear und zueinander parallel sind und infolge auch die Kontaktstellen 18 und 19 linear und zueinander parallel ausgebildet sind, kann die gedachte gerade Verbindung 23 auch eine einfache geometrische Ebene sein, die parallel durch die Kontaktstellen 18 und 19 verläuft bzw. an diesen endet, wie in Fig. 2 zu erkennen ist. Wesentlich ist, dass die gedachte gerade Verbindung 23 keinen Schnittpunkt mit der dem PV-Modul 1 abgewandten Außenseite 24 der seitlichen Außenwand 6 hat. Sind mehrere obere Kontaktstellen 18 an der Oberseite der oberen Außenwand 4 und mehrere untere Kontaktstellen 19 an Unterseite der Trägerwand 8 vorhanden, so ist es bevorzugt, wenn sämtliche Paarungen von oberen und unteren Kontaktstellen diese geometrische Bedingung erfüllen. Eine obere bzw. untere Kontaktstelle ist dort, wo das obere Angriffsende an der Oberseite der oberen Außenwand 4 bzw. das untere Angriffsende an der Unterseite der Trägerwand 8 angreift.

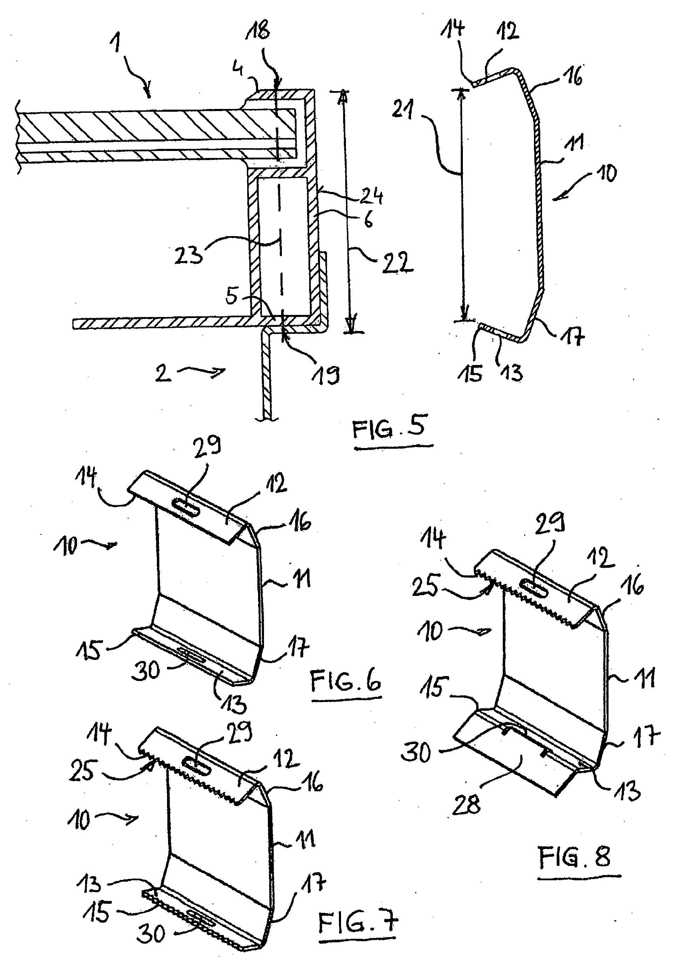

Aus Fig. 5 ist ersichtlich, dass in einem ungespannten Zustand des Haltekörpers 10 ein Abstand 21 der Angriffsenden 14, 15 kürzer ist als ein Abstand 22 zwischen den Kontaktstellen 18, 19. Die gedachte gerade Verbindung 23 zwischen den Kontaktstellen 18, 19 ist frei von einer Verschneidung mit der der PV-Modul 1 abgewandten Außenseite 24 der seitlichen Außenwand 6.

Der Haltekörper 10 ist bezüglich seiner Angriffsabschnitte 12, 13 symmetrisch ausgebildet, wobei im aufgesetzten und verspannten Zustand der Abstand 21 zwischen den Angriffsenden 14, 15 auf den Abstand 22 biegeelastisch vergrößert ist, so dass das PV-Modul 1 und der Modulträger 2 zusammengeklammert sind. Zusätzlich zu der dabei erfolgenden Aufspreizung der Angriffsabschnitte 12, 13 ist auch der Mittelabschnitt 11 zur seitlichen Außenwand 6 hin gewölbt. Zudem wird der Abschnitt 9 der Trägerwand 8 vom Haltekörper 10 umgriffen.

Die beiden Angriffsenden 14, 15 weisen in einer Zackenstruktur zackenförmige Fortsätze 25 zur Erhöhung der Reibung an den Kontaktstellen 18, 19 auf.

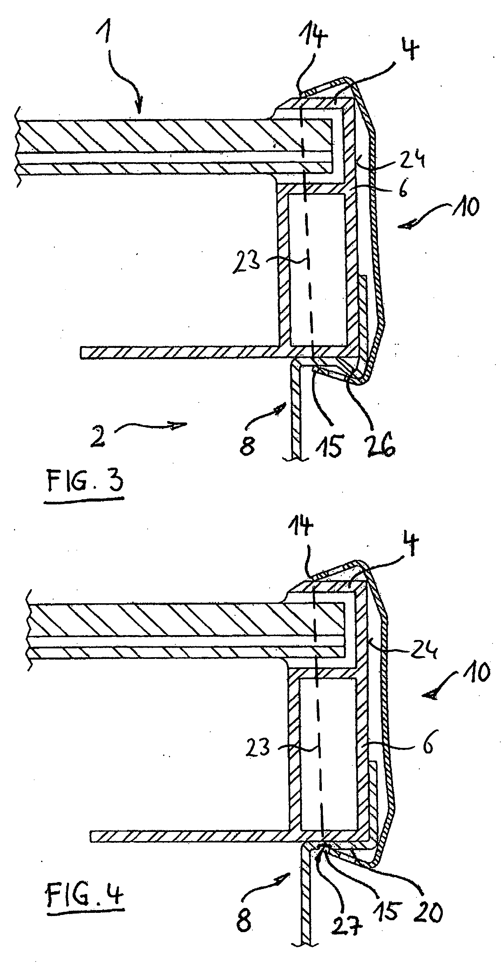

Fig. 3 entspricht hinsichtlich der Anordnung des PV-Moduls 1 und des Modulträgers 2 sowie deren Verklammerung mit dem Haltekörper 10 der Anordnung in Fig. 1. Als weitere Ausgestaltung ist hier für einen zusätzlichen Schutz gegen ein Abziehen oder ein Abfallen des Haltekörpers 10 an der Trägerwand 8 durch Blechkantung ein nach unten abstehender Rand 26 ausgebildet, welcher das untere Angriffsende 15 hintergreift. Ein solcher Rand, welcher das obere Angriffsende 14 hintergreift, könnte auch an der oberen Außenwand 4 angeformt sein.

Für eine ähnliche Sicherungsfunktion ist alternativ zur Ausführungsform nach Fig. 3 in der Anordnung nach Fig. 4 an der Unterseite 20 der Trägerwand 8 eine rillenförmige Vertiefung 27 angebracht, in welche das untere Angriffsende 15 eingreift. Auch an der oberen Außenwand 4 könnte eine entsprechende rillenförmige Vertiefung angebracht sein, in die das obere Angriffsende 14 eingreifen kann.

In Fig. 5 ist die Ausgangslage vor der Verklammerung dargestellt, wobei das PV-Modul 1 bereits lagerichtig auf den Modulträger 2 aufgesetzt ist und der Haltekörper 10 für eine Verklammerung bereit gestellt ist.

In den Fig. 6, 7 und 8 sind drei unterschiedliche Ausführungsformen von Haltekörpern 10 für eine Verklammerung gezeigt, die alle einen Mittelabschnitt 11, Angriffsabschnitte 12, 13 und Zwischenabschnitte 16, 17 aufweisen.

In der Ausführungsform nach Fig. 6 sind die Angriffsenden 14, 15 gerade durchgehende Kanten, während in der Ausführungsform nach Fig. 7 die Angriffsenden 14, 15 eine Zackenstruktur mit zackenförmigen Fortsätzen 25 wie in den Fig. 1 bis 4 aufweisen. In ihrer Grundform sind die Angriffsenden 14, 15 auch im Falle von zackenförmigen Fortsätzen im Wesentlichen linear und parallel zueinander ausgebildet.

Bei der Ausführungsform des Haltekörpers 10 nach Fig. 8 ist am unteren Angriffsabschnitt 13 ein abgekanteter Aufschiebeabschnitt 28 angeformt, welcher bei einer Montage des Haltekörpers 10 am Klammerort durch Aufschlagen mit einem Hammer als Aufschiebeschräge verwendbar ist.

Bei allen drei Ausführungsformen der Fig. 6, 7 und 8 sind zudem im mittleren Bereich der Angriffsabschnitte 12, 13 jeweils Ausnehmungen 29, 30 für eine nachfolgend erläuterte Montage mittels einer Montagezange 31 angebracht.

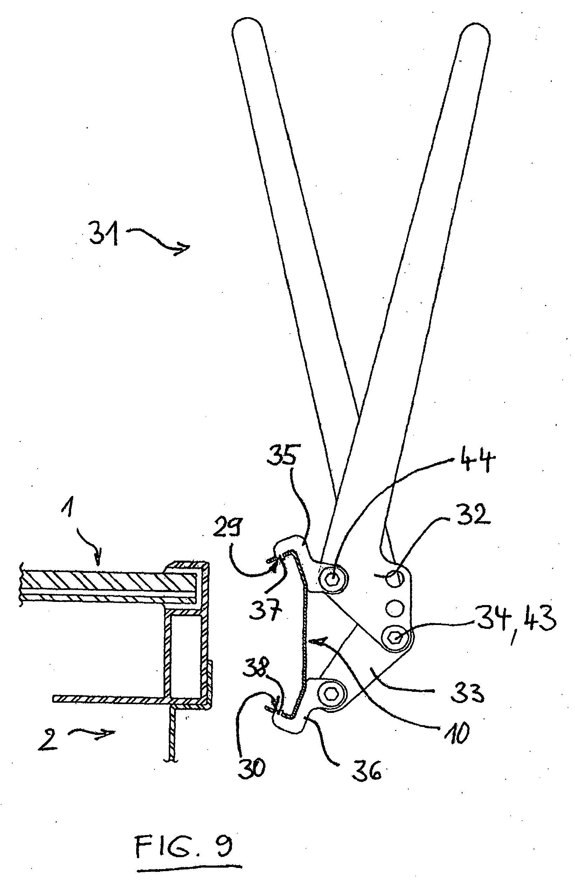

In Fig. 9 ist die offene Montagezange 31 dargestellt, welche anschließend an Handgriffbereiche einen ersten Winkelhebel 32 und einen zweiten Winkelhebel 33 aufweist. Die Winkelhebel 32, 33 sind etwa L-förmig. Der erste Winkelhebel 32 ist an seinem freien Ende mit dem zweiten Winkelhebel 33 an dessen Winkelscheitel über eine Schwenkachse 34 schwenkbar verbunden. Am Winkelscheitel des ersten Winkelhebels 32 ist eine erste Schwenkaufnahme 35 und am freien Ende des zweiten Winkelhebels 33 eine zweite Schwenkaufnahme 36 achsparallel schwenkbar zur Schwenkachse 34 angeordnet.

In Fig. 9 liegt in den Schwenkaufnahmen 35, 36 bereits ein Haltekörper 10 ein, wobei die Aufnahmestrukturen der Schwenkaufnahmen 35, 36 aufeinander zugerichtet sind und den Außenkonturen im Bereich der Zwischenabschnitte 16, 17 und der Angriffsabschnitte 12, 13 entsprechen. Zudem greifen die Schwenkaufnahmen 35, 36 mit aufeinander zugerichteten Eingriffhakenteilen 37, 38 in die Ausnehmungen 29, 30 des Haltekörpers 10 ein.

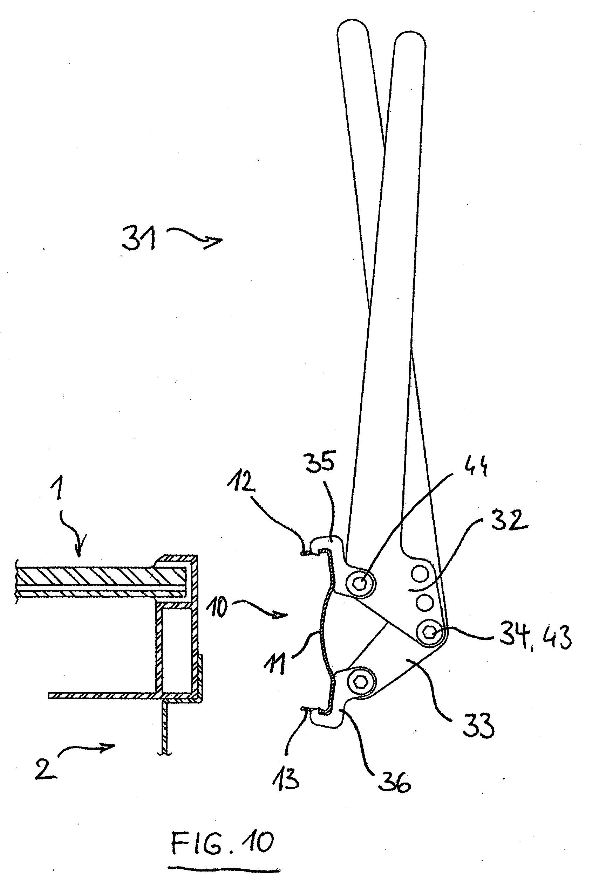

Zum Setzen des Haltekörpers 10 wird die Montagezange 31 geschlossen wie in Fig. 10 dargestellt. Dabei schwenken die Schwenkaufnahmen 35, 36 an der Montagezange 31 auf und spreizen entsprechend die Angriffsabschnitte 12, 13 auf, wobei zudem der Mittelabschnitt 11 in Richtung weg von der Schwenkachse 34 gewölbt wird. In diesem Zustand kann der Haltekörper 10 mit der Montagezange 31 auf die zur Verklammerung vorbereitete Anordnung aus PV-Modul 1 und Modulträger 2 frei aufgesteckt werden. Mit dem Öffnen der Montagezange 31 und deren Abnahme vom Haltekörper 10 wird der fertig montierte verklammerte Zustand hergestellt wie er in den Fig. 1 bis 4 gezeigt ist.

Damit die Montagezange 31 für Haltekörper 10 mit stark unterschiedlicher Klammerweite geeignet ist, ist die Schwenkachse 34 bezüglich des ersten Winkelhebels 32 mittels zweier alternativer Achslager schrittweise verstellbar.

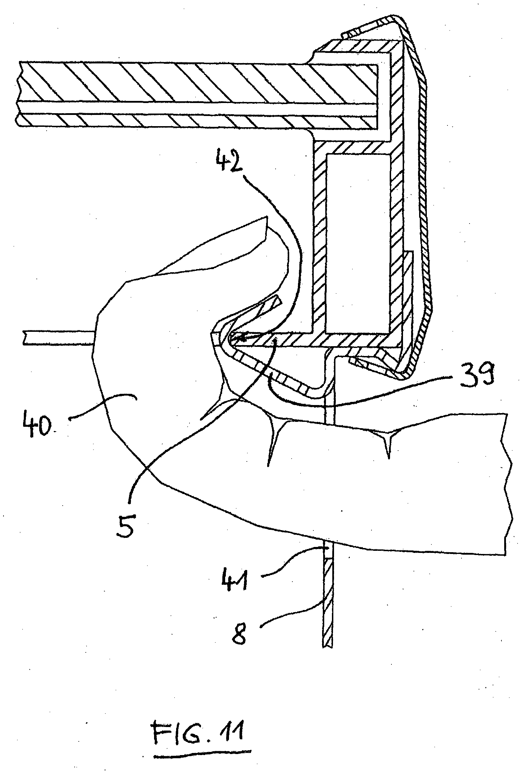

In Fig. 11 ist eine Weiterbildung der Anordnung nach Fig. 3 dargestellt, wobei als integraler Bestandteil der Trägerwand 8 eine Lasche 39 ausgeklinkt ist. Wie dargestellt wird die Lasche 39 mit einem Finger 40 durch die Laschenöffnung 41 hindurch von hinten her als Lagesicherung um das innere Ende 42 der unteren Außenwand 5 herumgebogen.

**Bezugszeichenliste**

| | | | |
|---|---|---|---|
| 1 | PV-Modul | 33 | zweiter Winkelhebel |
| 2 | Modulträger | 34 | Schwenkachse |
| 3 | Rahmensegment | 35 | erste Schwenkaufnahme |
| 4 | obere Außenwand | 36 | zweite Schwenkaufnahme |
| 5 | untere Außenwand | 37 | Eingriffhakenteil |
| 6 | seitliche Außenwand | 38 | Eingriffhakenteil |
| 7 | Oberseite (Trägerwand) | 39 | Lasche |
| 8 | Trägerwand | 40 | Finger |
| 9 | Abschnitt (Trägerwand) | 41 | Laschenöffnung |
| 10 | Haltekörper | 42 | hinteres Ende |
| 11 | Mittelabschnitt | | |
| 12 | Angriffsabschnitt | | |
| 13 | Angriffsabschnitt | | |
| 14 | erstes Angriffsende | | |
| 15 | zweites Angriffsende | | |
| 16 | Zwischenabschnitt | | |
| 17 | Zwischenabschnitt | | |
| 18 | obere Kontaktstelle | | |
| 19 | untere Kontaktstelle | | |
| 20 | Unterseite (Trägerwand) | | |
| 21 | Abstand (Angriffsenden) | | |
| 22 | Abstand (Kontaktstellen) | | |
| 23 | Verbindung (Kontaktstellen) | | |
| 24 | Außenseite (seitliche Außenwand) | | |
| 25 | zackenförmige Fortsätze | | |
| 26 | Rand (Trägerwand) | | |
| 27 | rillenförmige Vertiefung | | |
| 28 | Aufschiebeabschnitt | | |
| 29 | Ausnehmung | | |
| 30 | Ausnehmung | | |
| 31 | Montagezange | | |
| 32 | erster Winkelhebel | | |

## Patentansprüche

1. Anordnung eines gerahmten Photovoltaik-Moduls (PV-Moduls) an einem Träger,
mit einem Rahmensegment (3), das ein PV-Modul (1) einfasst und das eine obere, eine untere und eine seitliche Außenwand (4, 5, 6) aufweist, wobei die obere und die untere Außenwand (4, 5) einander gegenüberliegen und mittels der seitlichen Außenwand (6) miteinander verbunden sind,
mit einer Trägerwand (8) eines Modulträgers (2), wobei sich das Rahmensegment (3) mittels der unteren Außenwand (5) auf einer Oberseite (7) der Trägerwand (8) abstützt,
mit einem Haltekörper (10), der integral geformt ist und ein erstes Angriffsende (14) und ein zweites Angriffsende (15) aufweist, wobei der Haltekörper (10) mittels seines ersten Angriffsendes (14) an einer oberen Kontaktstelle (18) an der oberen Außenwand (4) angreift und das Rahmensegment (3) gegen die Trägerwand (8) hält, und der Haltekörper (10) mit dem zweiten Angriffsende (15) an einer unteren Kontaktstelle (19) an einer von der Oberseite (7) abgewandten Unterseite (20) der Trägerwand (8) angreift, und
eine gedachte gerade Verbindung (23) zwischen der ersten Kontaktstelle (18) und der zweiten Kontaktstelle (19) frei von einer Verschneidung mit der dem PV-Modul (1) abgewandten Außenseite (24) der seitlichen Außenwand (6) ist,
**dadurch gekennzeichnet,**
**dass** der Haltekörper (10) biegeelastisch ist, und ein Abstand (21) zwischen dem ersten Angriffsende (14) und dem zweiten Angriffsende (15) in einem ungespannten Zustand des Haltekörpers (10) kürzer ist als der Abstand (22) zwischen der oberen Kontaktstelle (18) und der unteren Kontaktstelle (19), sodass das Rahmensegment (3) mit dem Modulträger (2) mittels des Haltekörpers (10) zusammengespannt ist.

2. Anordnung nach Anspruch 1, **dadurch gekennzeichnet,**
**dass** die Trägerwand (8) einen Abschnitt (9) aufweist, an dem die Außenseite (24) der seitlichen Außenwand (6) anlegbar ist und/oder anliegt, und der Haltekörper (10) diesen Abschnitt (9) umgreift.

3. Anordnung nach Anspruch 1 oder Anspruch 2, **dadurch gekennzeichnet,**
**dass** die Trägerwand (8) eine vorzugsweise durch Blechkantung oder Blechfalzung hergestellte Krümmung oder einen Rand (26) aufweist, den das untere Angriffsende (15) hintergreift und/oder die obere Außenwand (4) eine Krümmung oder einen Rand aufweist, den das obere Angriffsende (14) hintergreift.

4. Anordnung nach einem der Ansprüche 1 bis 3, **dadurch gekennzeichnet,**
**dass** die Trägerwand (8) eine vorzugsweise rillenförmige Vertiefung (27) aufweist, in welche das untere Angriffsende (15) eingreift und/oder die obere Außenwand (4) eine Vertiefung aufweist, in welche das obere Angriffsende (14) eingreift.

5. Anordnung nach einem der Ansprüche 1 bis 4, **dadurch gekennzeichnet,**
**dass** das erste Angriffsende (14) und/oder das zweite Angriffsende (15) mehrere zackenförmige Fortsätze (25), insbesondere zur Erhöhung einer Reibung an der Kontaktstelle (18, 19), aufweist.

6. Anordnung nach einem der Ansprüche 1 bis 5, **dadurch gekennzeichnet,**
**dass** der Haltekörper (10) C-ähnlich geformt ist mit einem Mittelabschnitt (11) und zwei daran in Gegenüberlage angeordneten Angriffsabschnitten (12, 13), deren freie Enden die Angriffsenden (14, 15) sind.

7. Anordnung nach Anspruch 6, **dadurch gekennzeichnet,**
**dass** die Angriffsabschnitte (12, 13) in Richtung zu ihren Angriffsenden (14, 15) konvergieren.

8. Anordnung nach Anspruch 6 oder 7, **dadurch gekennzeichnet,**
**dass** die Angriffsabschnitte (12, 13) mittels Zwischenabschnitten (16, 17) mit dem Mittelabschnitt (11) verbunden sind und die Zwischenabschnitte (16, 17) ausgehend vom Mittelabschnitt (11) divergieren.

9. Anordnung nach Anspruch 8, **dadurch gekennzeichnet,**
**dass** die Angriffsabschnitte (12, 13) und die Zwischenabschnitte (16, 17) zueinander winkelig sind, wobei die Winkelscheitel voneinander weggerichtet sind.

10. Anordnung nach einem der Ansprüche 6 bis 9, **dadurch gekennzeichnet,**
**dass** wenigstens an einem Angriffsabschnitt (12, 13), vorzugsweise am unteren Angriffsabschnitt (13) ein abgekanteter Aufschiebeabschnitt (28) als Aufschiebeschräge angeformt ist.

11. Anordnung nach einem der Ansprüche 1 bis 10, **dadurch gekennzeichnet,**
**dass** als integraler Bestandteil der Trägerwand (8) eine Lasche (39) ausgeklinkt ist und dass die Lasche (39) um das innere Ende (42) der Außenwand (5) gebogen ist.

12. Anordnung nach einem der Ansprüche 1 bis 11, **dadurch gekennzeichnet,**
**dass** die Angriffsenden (14, 15) im Wesentlichen linear und zueinander parallel sind und die Kontaktstellen (18, 19) infolge ebenfalls linear und zueinander parallel ausgebildet sind.

13. Verfahren zur Herstellung einer Anordnung nach einem der Ansprüche 6 bis 11 mit
einem Montageset aufweisend den Haltekörper (10) und eine Montagezange (31), wobei der Haltekörper (10) in das Zangenmaul einsetzbar ist und beim Schließen der Montagezange (31) die Angriffsabschnitte (12, 13) zur Vergrößerung der Klammerweite aufspreizbar sind, dergestalt, dass die Angriffsabschnitte (12, 13) mit ihren Angriffsenden (14, 15) auf die obere Außenwand (4) des Rahmensegments (3) und die Unterseite (20) der Trägerwand (8) frei aufsteckbar sind und beim Öffnen und nach Abnahme der Montagezange (31) die Klammerweite biegeelastisch reduziert ist, wobei die Angriffsenden (14, 15) an ihren zugeordneten Kontaktstellen (18, 19) mit ihrer Klammerkraft angreifen.

14. Verfahren nach Anspruch 13, **dadurch gekennzeichnet,**
**dass** die Montagezange zwei jeweils an einen Handgriff anschließende Winkelhebel (32, 33) aufweist,
wobei ein erster Winkelhebel (32) an seinem freien Ende mit dem zweiten Winkelhebel (33) an dessen Winkelscheitel (43) über eine Schwenkachse (34) schwenkbar verbunden ist,
**dass** am Winkelscheitel (44) des ersten Winkelhebels (32) und am freien Ende des zweiten Winkelhebels (33) jeweils Schwenkaufnahmen (35, 36) angeordnet sind mit der Gestalt der Angriffsabschnitte (12, 13) entsprechenden Aufnahmestrukturen, sowie jeweils einem Eingriffhakenteil (37, 38) zum Eingriff in eine Ausnehmung (29, 30) am jeweiligen Angriffsabschnitt (12, 13),
dergestalt, dass beim Schließen der Montagezange (31) die Schwenkaufnahmen aufschwenken und dabei der Mittelabschnitt (11) in Richtung weg von der Schwenkachse (34) gewölbt und die Angriffsabschnitte (12, 13) aufgespreizt werden.

## Claims

1. Arrangement of a framed photovoltaic module (PV-module) on a support, having a frame segment (3), which encloses a PV-module (1) and having an upper, a lower and a lateral outside (4, 5, 6), wherein the upper and the lower outer wall (4, 5) facing each other and are interconnected by means of the lateral outer wall (6),
having a support wall (8) of a module carrier (2), wherein the frame segment (3) is supported by means of the lower outer wall (5) on an upper surface (7) of the support wall (8),
having a holding body (10), which is integrally formed and shows a first engagement end (14) and a second engagement end (15), wherein the holding body (10) engages by means of its first engagement end (14) at an upper contact point (18) on the upper outer wall (4) and holds the frame segment (3) against the support wall (8), and the holding body (10) engages by means of its second engagement end (15) at a lower contact point (19) at a bottom side (20), which is turned away from the upper surface (7) of the support wall (8), and
an imaginary straight connection (23) between the first contact point (18) and the second contact point (19), which is free from an intersection with the turned away outer side (24) of the lateral outer wall (6) of the PV-module (1),
**characterized in that**
the holding body (10) is formed flexible and elastic and that the distance (21) between the first engagement end (14) and the second engagement end (15) in an unclamped state of the holding body (10) is shorter than the distance (22) between the upper contact point (18) and the lower contact point (19), so that the frame segment (3) is clamped together with the module carrier (2) by means of the holding body (10).

2. Arrangement according to claim 1, **characterized in that**
the support wall (8) shows a section (9), at which the outer side (24) of the lateral outer wall (6) is applicable and/or is applied, and the holding body (10) encompasses said section (9).

3. Arrangement according to claim 1 or claim 2, **characterized in that**
the support wall (8) shows a curvature, preferably produced by sheet edging or sheet clinching, or an edge (26), which is engaged by the lower engagement end (15), and/or the upper outer wall (4) shows a curvature or an edge, which engages the upper engagement end (14).

4. Arrangement according to claim 1 to 3, **characterized in that**
the support wall (8) shows a preferably groove-shaped depression (27) into which the lower engagement end (15) engages and/or the upper outer wall (4) shows a depression into which the upper engagement end (14) engages.

5. Arrangement according to one of the claims 1 to 4, **characterized in that**
the first engagement end (14) and/or the second engagement end (15) show(s) multiple jagged projections (25), in particular for the increase of a friction at the contact points (18, 19).

6. Arrangement according to one of the claims 1 to 5, **characterized in that**
the holding body (10) is formed similar to a C with a middle section (11) and two engagement sections (12, 13), which are arranged in an opposite position thereto, said free ends being the engagement ends (14, 15).

7. Arrangement according to claim 6, **characterized in that**
the engagement sections (12, 13) converge towards their engagement ends (14, 15).

8. Arrangement according to claim 6 or 7, **characterized in that**
the engagement sections (12, 13) are connected to the middle section (11) by means of middle sections (16, 17) and the middle sections (16, 17) diverge from middle section (11).

9. Arrangement according to claim 8, **characterized in that**
the engagement sections (12, 13) and the middle sections (16, 17) are angled towards each other, wherein the apex angles are directed away from each other.

10. Arrangement according to one of the claims 6 to 9, **characterized in that**,
preferably at the lower engagement section (13), a beveled chamfered section (28) is formed as a chamfered edge to at least one of the engagement sections (12, 13).

11. Arrangement according to one of the claims 1 to 10, **characterized in that**
a tab (39) is disengaged as integral part of the support wall (8) and that the tab (39) is bent around the inner end (42) of the outer wall (5).

12. Arrangement according to one of the claims 1 to 11, **characterized in that**
the engagement ends (14, 15) are basically linear and parallel to each other and the contact points (18, 19) as a result thereof are likewise linear and parallel to each other.

13. Method for producing an assembly according to one of the claims 6 to 11 including a mounting kit comprising a holding body (10) and a mounting plier (31), wherein the holding body (10) is deployable into the beak of the forceps and when closing the mounting plier (31), the engagement sections (12, 13) can be spread open for enlarging the clip width such that the engagement sections (12, 13) with their engagement ends (14, 15) are freely attachable to the upper outer wall (4) of the frame segment (3) as well as to the bottom side (20) of the support wall (8) and when opening and after removal of the mounting plier (31) the clip width is reduced flexible and elastic, wherein the engagement ends (14, 15) engage at their associated contact points (18, 19) with their clamping force.

14. Method according to claim 13, **characterized in that**
the mounting plier shows two angle levers (32, 33), each associated to a handle, wherein a first angle lever (32) is pivotally connected at its free end to a second angle lever (33) at its apex angle (43) by a pivoting axis (34),
at the apex angle (44) of the first angle lever (32) and at the free end of the second angle lever (33) pivot mountings (35, 36) are arranged respectively such as receiving structures according to the engagement sections (12, 13), as well as a respective engaging hook part (37, 38) for engaging into a recess (29, 30) at the respective engagement section (12, 13), such that, when closing the mounting plier (31), the pivoting receptions swing open and thus the middle section (11) is arched in direction away from the pivoting axis (34) and the engagement sections (12, 13) are spread open.

## Revendications

1. Agencement d'un module photovoltaïque encadré (module PV) sur un support, comprenant
un segment de cadre (3) qui entoure un module PV (1) et qui présente une paroi extérieure supérieure, une paroi extérieure inférieure et une paroi extérieure latérale (4, 5, 6), la paroi extérieure supérieure et la paroi extérieure inférieure (4, 5) se faisant face et étant reliées l'une à l'autre par le biais de la paroi extérieure latérale (6),
une paroi porteuse (8) d'un support de module (2), le segment de cadre (3) prenant appui sur une face supérieure (7) de la paroi porteuse (8) par le biais de la paroi extérieure (5) inférieure.
un corps de maintien (10) qui est réalisé d'un seul tenant et présente une première extrémité de prise (14) et une deuxième extrémité de prise (15), le corps de maintien (10) entrant en contact par sa première extrémité de prise (14) avec un point de contact supérieur (18) sur la paroi extérieure supérieure (4) et maintenant le segment de cadre (3) contre la paroi porteuse (8), et le corps de maintien (10) entrant en contact par sa deuxième extrémité de prise (15) avec un point de contact inférieur (19) sur une face inférieure (20) opposée à la face supérieure (7) de la paroi porteuse (8), et
une droite imaginaire (23) passant par le premier point de contact (18) et par le deuxième point de contact (19) sans couper la face extérieure (24) opposée au module PV (1) de la paroi extérieure latérale (6),
**caractérisé en ce que**
le corps de maintien (10) est élastique en flexion, et **en ce que** dans un état non tendu du corps de maintien (10), une distance (21) séparant la première extrémité de prise (14) de la deuxième extrémité de prise (15) est inférieure à la distance (22) séparant le point de contact supérieur (18) et le point de contact inférieur (19) si bien que le segment de cadre (3) est serré avec le support de module (2) par le corps de maintien (10)

2. Agencement selon la revendication 1, **caractérisé en ce que**
la paroi porteuse (8) présente un segment (9) sur lequel la face extérieure (24) de la paroi extérieure latérale (6) peut venir et/ou vient en appui, et **en ce que** ce segment (9) vient en prise autour du corps de maintien (10).

3. Agencement selon la revendication 1 ou la revendication 2, **caractérisé en ce que**
la paroi porteuse (8) présente une courbure réalisée préférentiellement par pliage de tôle ou un bord (26) que vient prendre par derrière l'extrémité de prise inférieure (15), et/ou **en ce que** la paroi extérieure supérieure (4) présente une courbure ou un bord que vient prendre par derrière l'extrémité de prise supérieure (14).

4. Agencement selon l'une des revendications 1 à 3, **caractérisé en ce que**
la paroi porteuse (8) présente un évidement (27) préférentiellement en forme de rainure dans laquelle vient s'engager l'extrémité de prise inférieure (15), et/ou **en ce que** la paroi extérieure supérieure (4) présente un évidement dans lequel vient s'engager l'extrémité de prise supérieure 15).

5. Agencement selon l'une des revendications 1 à 4, **caractérisé en ce que**
la première extrémité de prise (14) et/ou la deuxième extrémité de prise (15) présente plusieurs prolongements (25) en forme de dents, plus particulièrement afin d'augmenter la friction au point de contact (18 19).

6. Agencement selon l'une des revendications 1 à 5, **caractérisé en ce que**
le corps de maintien (10) est réalisé en forme de C et comporte un segment central (11) ainsi que deux segments de prise (12, 13) qui sont disposés en vis-à-vis sur le corps de maintien et qui constituent les extrémités de prise (14, 15) libres.

7. Agencement selon la revendication 6, **caractérisé en ce que**
les segments de prise (12, 13) convergent en direction de leurs extrémités de prise (14, 15).

8. Agencement selon la revendication 6 ou 7, **caractérisé en ce que**
les segments de prise (12, 13) sont reliés au segment central (11) par des segments intermédiaires (16, 17), et ces segments intermédiaires (16, 17) divergent du segment central (11).

9. Agencement selon la revendication 8, **caractérisé en ce que**
les segments de prise (12, 13) et les segments intermédiaires (16, 17) sont disposés de manière à former un angle, les sommets de ces angles pointant dans une direction opposée.

10. Agencement selon l'une des revendications 6 à 9, **caractérisé en ce que**
un segment de glissement (28) est plié pour former une pente de glissement au moins sur un segment de prise (12, 13), préférentiellement sur le segment de prise inférieur (13).

11. Agencement selon l'une des revendications 1 à 10, **caractérisé en ce que** une patte (39) réalisée d'un seul tenant avec la paroi porteuse (8) est découpée dans cette dernière et **en ce que** cette patte (39) est repliée autour de l'extrémité intérieure (42) de la paroi extérieure (5).

12. Agencement selon l'une des revendications 1 à 11, **caractérisé en ce que**
que les extrémités de prise (14, 15) sont sensiblement linéaires et parallèles l'une par rapport à l'autre et que les points de contact (18, 19) sont de ce fait eux aussi configurés linéaires et parallèles l'un par rapport à l'autre.

13. Procédé pour la fabrication d'un agencement selon l'une des revendications 6 à 11, comportant un kit de montage comprenant le corps de maintien (10) et une pince de montage (31), le corps de maintien (10) pouvant être introduit dans les mâchoires de la pince, et les segments de prise (12, 13) pouvant, lors de la fermeture de la pince de montage (31), être écartés pour augmenter la largeur d'ouverture des segments de prise de sorte que les segments de prise (12, 13) peuvent librement venir se fixer avec leurs extrémités de prise (14, 15) sur la paroi extérieure supérieure (4) du segment de cadre (3) et sur la face inférieure (20) de la paroi porteuse (8), et que cette largeur d'ouverture est réduite de manière élastique en flexion lors de l'ouverture et du retrait de la pince de montage (31), les extrémités de prise (14, 15) étant alors en prise moyennant leur force de serrage aux points de contacts correspondants.

14. Procédé selon la revendication 13, **caractérisé en ce que**
la pince de montage présente deux leviers coudés (32, 33) se prolongeant respectivement pour former conjointement une poignée,
un premier levier coudé (32) étant relié par son extrémité libre au deuxième levier coudé (33), au sommet angulaire (43) de ce dernier, de façon pivotante autour d'un axe de pivotement (34),
et **en ce que** des logements pivotants (35, 36), qui sont pourvus de structures de logement correspondantes à la forme des segments de prise (12, 13) et dotés respectivement d'une pièce formant crochet de prise (37, 38) destinée à venir en prise dans un évidement (29, 30) sur le segment de prise (37, 38) correspondant, sont respectivement disposés au sommet angulaire (44) du premier levier coudé (32) et à l'extrémité libre du deuxième levier coudé (33),
de sorte que lors de la fermeture de la pince de montage (31), les logements pivotants s'ouvrent par pivotement tandis que le segment central (11) se bombe dans une direction qui l'éloigne de l'axe de pivotement (34) et que s'écartent les segments de prise (12, 13).
